# EUROPEAN PATENT SPECIFICATION

(11) **EP 2 787 329 B1**
(45) Date of publication and mention of the grant of the patent: **15.02.2017**
(21) Application number: 13162305.0
(22) Date of filing: 04.04.2013
(51) Int. Cl.: G01F 1/36, G01F 1/40

(54) **METERING A FLOW OF A FLUID THROUGH A CYLINDRICAL TUBE SECTION**
MESSEN EINES FLUSSES EINES FLUIDS DURCH EINEN ZYLINDERFÖRMIGEN ROHRABSCHNITT
MESURER UN FLUX D'UN FLUIDE À TRAVERS UNE SECTION DE TUBE CYLINDRIQUE

(43) Date of publication of application: 08.10.2014
(73) Proprietor: Nanjing Youyang Control Technology Co. Ltd, Nanjing 211102 (CN); PIVTEC-GmbH, 37075 Göttingen (DE)
(72) Inventor: Ming, Xiao, Nanjing 210-016 (CN); Kompenhans, Jürgen, 37130 Gleichen (DE)
(74) Representative: REHBERG HÜPPE + PARTNER

(56) References cited:
- WO-A1-97/25594
- WO-A1-98/10249
- DE-A1-102007 044 079

## Description

### FIELD OF THE INVENTION

The present invention generally relates to an apparatus for metering a flow of a fluid through a cylindrical tube section comprising the features of the preamble of independent claim 1.

One way of metering a flow of a fluid through a cylindrical tube section is measuring a differential pressure caused by a restriction in the flow line which generates a pressure drop that bears a relationship to the flow rate. According to the preamble of independent claim 1, this restriction in the flow line is provided by a flow deviating body which is arranged in the tube section such that just an annular flow channel remains between the outer diameter of the flow deviating body and an inner diameter of the cylindrical tube section.

### BACKGROUND ART

An apparatus for metering a flow of a fluid through a cylindrical tube section disclosed in CN 2736741 comprises a basically drop-shaped flow deviating body permanently fixed in the centre of a tube section via fins radially extending from a front area of the flow deviating body up to the wall of the tube section. The flow deviating body is aligned with the longitudinal axis of the tube section and has a cylindrical middle section so that an annular flow channel remaining between an outer diameter of the flow deviating body and an inner diameter of the cylindrical tube section has a constant height over the cylindrical middle section. The flow forced through this annular flow channel is accelerated and conditioned such that it is stable and displays no separation or vortices neither within the annular flow channel nor in front of the flow deviating body nor at the trailing edge of the flow deviating body. As a result, a pressure difference between a high pressure of the fluid at a front point of the flow deviating body and a low pressure of the fluid in the annular flow channel can be evaluated for the flow rate of the flow based on computational fluid mechanics (CFD). At least, CFD can be used to evaluate the pressure difference for flow conditions for which no calibration measurement data are available in that calibration measurement data for other flow conditions are extrapolated. With flow separations and vortices such an extrapolation is not allowable.

According to CN 2736741, the high pressure of the fluid is tapped at a front point of the flow deviating body via a tapping line extending through the flow deviating body and from the downstream end of the fluid deviating body radially through the wall of the cylindrical tube section. Alternatively, the high pressure of the fluid is tapped via a tapping line radially extending through the wall of the tube section and ending at the inner diameter of the tube section in front of the flow deviating body. The low pressure of the fluid in the annular flow channel is always tapped by means of a further tapping line radially extending through the wall of the tube section and ending at the inner diameter of the tube section.

US 7,484,425 B2 discloses a fluid flow meter with a flow deviating body having upstream and downstream conical portions and an intermediate cylindrical portion. The flow deviating body is held within a chamber through which a flow flows. A first pressure sensor measures the fluid pressure at the apex of the first conical portion, while a second pressure sensor obtains a second pressure measurement at the cylindrical portion of the body. The first and second pressure sensors include tapping lines extending through a pylon supporting the body within the chamber. The tapping line of the first pressure sensor ends at the apex of the first conical portion, and the tapping line of the second pressure sensor ends somewhere between an outer diameter of the cylindrical portion of the body and an inner diameter of the chamber at the surface of the pylon. The comparison of the first and second pressure measurements serves as an indication for the mass flow of fluid through the chamber.

WO 97/25594 A1 discloses a flow monitoring apparatus comprising the features of the preamble of independent claim 1. The flow deviating body of this apparatus comprises conical and cylindrical sections. The high pressure tap is located in an leading cylindrical section of small diameter, whereas the low pressure tap is located in a downstream cylindrical section of greater diameter. Further, radial supports for the flow deviating body extend from the cylindrical section with greater diameter to the wall of the cylindrical tube section in which the flow deviating body is arranged. In another embodiment of the flow monitoring apparatus disclosed in WO 97/25594 A1 in which the pressure taps are provided in the wall of the cylindrical tube section, the flow deviating body has a hydrofoil shape located axially within the cylindrical tube section by means of radial supports. The leading end of this flow deviating body is located between the high pressure tap and the low pressure tap with the flow deviating body being flat in the vicinity of the low pressure tap.

### PROBLEM OF THE INVENTION

It is the problem of the present invention to provide an apparatus for metering a flow of a fluid through a cylindrical tube section whose flow deviating body is particularly easily replaced in case of abrasion by the fluid flow.

### SOLUTION

According to the present invention, the problem is solved by an apparatus comprising the features of independent claim 1. The dependent claims define preferred embodiments of the apparatus of the present invention.

### DESCRIPTION OF THE INVENTION

In the present invention, the high pressure is tapped at a front point of the flow deviating body, i.e. somewhere at the front of the flow deviating body facing the flow. The front point at which the high pressure is tapped may be the foremost tip of the flow deviating body. The front point may, however, also be another point at the front of the flow deviating body up to those points of the flow deviating body upstream a mouth of the annular flow channel remaining between the outer diameter of the flow deviating body and the inner diameter of the cylindrical tube section.

In the present invention, both the high pressure and the low pressure of the fluid are tapped at the flow deviating body itself. This may either be implemented by a tapping line ending at the surface of the flow deviating body and guiding the respective pressure to a pressure transducer, for example, or by a pressure transducer like, for example, a pressure-sensitive element or film directly located at the surface of the flow deviating body. Implementing the step of tapping the high pressure may also differ from implementing the step of tapping the low pressure. Thus, the high pressure may be tapped by means of a tapping line, whereas the low pressure may be tapped by means of a pressure transducer directly arranged at the surface of the flow deviating body, or vice versa.

In the present invention at least both the high pressure and the low pressure are transduced into electric signals, or a pressure difference between the high pressure and the low pressure is transduced into electric signals. This step of transducing may partially or completely be executed outside the flow deviating body, particularly outside the cylindrical tube section in which the flow deviating body is arranged. Preferably, however, both the high pressure and the low pressure and/or the pressure difference between the high pressure and the low pressure are transduced into the electric signals within the flow deviating body. In this case, there is no need for any tapping line extending from the flow deviating body to the outside of the cylindrical tube section, i.e. through the wall of the tube section. As a result, no tapping line extending through the wall of the tube section and its feed through is prone to leakage, damage or manipulation.

In one embodiment of the present invention, the low pressure of the fluid in the annular flow channel is tapped at a plurality of points at the outer diameter of the flow deviating body. This plurality of points may be distributed over a circumference of the flow deviating body. Alternatively or additionally, the plurality of points may be longitudinally distributed along a cylindrical middle section of the flow deviating body. The plurality of points at which the low pressure of the fluid in the annular flow channel is tapped particularly allows for checking and monitoring whether the flow deviating body is properly located at the centre of the cylindrical tube section and aligned with the longitudinal axis of the cylindrical tube section. Only in this position and with this alignment, the low pressure is the same at the plurality of points distributed over the circumference of the flow deviating body and essentially the same at the plurality of points along the cylindrical middle section of the flow deviating body.

Further, the plurality of points may also be used to obtain an averaged low pressure of the fluid in the annular flow channel.

In case of tapping the low pressure of the fluid in the annular flow channel at a plurality of points distributed along a cylindrical middle section of the flow deviating body, i.e. in the flow direction, it should be cared for not to arrange a further point in an area where the flow is disturbed by an already existing upstream point at which the low pressure is tapped. For example, tapping the low pressure may cause vortices which may disturb the measurement of the low pressure in a downstream area of the annular flow channel.

The low pressure tapped at each of the plurality of points at the outer diameter of the flow deviating body may separately be transduced into electric signals. Again, this is preferably done within the flow deviating body.

Alternatively, a difference between the high pressure and the low pressure tapped at each of the plurality of points at the outer diameter of the flow deviating body may separately be transduced into electric signals. This is also preferably done within the flow deviating body.

In the present invention, a temperature of the fluid may also be measured at at least one point at the flow deviating body for providing an electric temperature signal. The temperature of the fluid may be used in evaluating the difference between the high pressure and the low pressure as the temperature may have a strong influence on such parameters as the viscosity and density of the fluid and the Reynolds number of the flow, for example, and thus on the relation between this pressure difference and the flow rate of interest.

In the present invention, the high and the low pressure of the fluid may not only be transduced either separately or with regard to their difference into electric signals, but these electric signals may also be processed within the flow deviating body to directly determine the flow rate of interest, for example. This processing may also include considering the electric temperature signal when evaluating the low pressure and the high pressure or their difference or the corresponding electric signals.

In the present invention, the electric signals or the processed electric signals may be forwarded from the flow deviating body to a device outside the cylindrical tube section. This may be implemented by means of a wired or wireless communication interface. A wireless communication interface allows for metering a flow of a fluid through a cylindrical tube section without having any mechanical feed through the wall of the cylindrical tube section. Further, such a wireless communication interface allows for metering of the flow in a concealed way which is not easily noticed and thus not easily manipulated from the outside of the tube guiding the flow.

The present invention provides an apparatus for metering a flow of a fluid through a cylindrical tube section. The apparatus comprises a flow deviating body configured to be arranged in the tube section such that an annular flow channel remains between an outer diameter of the flow deviating body and an inner diameter of the cylindrical tube section. A high pressure tap at a front point of the flow deviating body is configured to tap a high pressure of the fluid. At least one low pressure tap located at the outer diameter of the flow deviating body is configured to tap a low pressure of the fluid in the annular flow channel; and at least one pressure transducer is configured to transduce at least either both the high pressure and the low pressure or a pressure difference between the high pressure and the low pressure into electric signals.

As already noted when explaining the present invention, the front point of the flow deviating body at which the high pressure tap configured to tap the high pressure of the fluid is arranged needs not to be the foremost projecting tip of the flow deviating body; and the terms "high pressure tap" and "low pressure tap" both include the end of a tapping line leading to a pressure transducer, for example, and a pressure transducer directly arranged at the point of the high or low pressure tap.

Preferably, the at least one pressure transducer is located within the flow deviating body.

A plurality of low pressure taps may be provided at the outer diameter of the flow deviating body. This plurality of low pressure taps may be distributed over a circumference of the flow deviating body and/or along a cylindrical middle section of the flow deviating body in axial direction. A plurality of transducers my be configured to either separately transduce the low pressure tapped at each of the plurality of low pressure taps into electric signals or to separately transduce each difference between the high pressure and the low pressure tapped at each of the plurality of low pressure taps into electric signals.

The apparatus of the present invention may further comprise a temperature sensor arranged at the flow deviating body, the temperature sensor being configured to measure a temperature of the flow and to provide an electric temperature signal.

The apparatus of the present invention may further comprise a processor within the flow deviating body, the processor being configured to process all electric signals into a processed signal.

The apparatus of the present invention may further comprise a wired or wireless communication interface configured to forward the electric signals or the processed signal from the flow deviating body to a device outside the cylindrical tube section. In case of a wired communication interface, the wire preferably extends through at least one fin supporting the flow deviating body in the cylindrical tube section.

The flow deviating body of the apparatus of the present invention is of an elongated drop shape having a cylindrical middle section. This flow deviating body is centred within the cylindrical tube section and aligned with a longitudinal axis of the cylindrical tube section by means of a first plurality of fins provided at a rounded front end of the flow deviating body and a second plurality of fins provided at a tipped back end of the flow deviating body. Both the first plurality of fins and the second plurality of fins comprise at least three fins for stabilizing the flow deviating body. Thus, a very stable arrangement and alignment of the flow deviating body within the tube section is achieved.

The at least one low pressure tap configured to tap the low pressure of the fluid in the annular flow channel is offset in circumferential direction with regard to the fins of the first plurality of fins so that no disturbances of the flow due to the presence of the fins of the first plurality of fins affects the low pressure at the at least one low pressure tap. Such disturbances may, for example, be wake vortices. However, the fins of the apparatus according to the present invention are preferably designed in way that such disturbances are not caused and that the flow resistance of the fins is kept as low as possible. For example, the fins of at least the first or the second plurality of fins may extend beyond the front end or back end of the flow deviating body, and the fins of at least the first or the second plurality of fins, in an axial direction of the cylindrical tube section away from the flow deviating body, may taper in height towards the inner diameter of the cylindrical tube section.

Advantageous developments of the invention result from the claims, the description and the drawings. The advantages of features and of combinations of a plurality of features mentioned at the beginning of the description only serve as examples and may be used alternatively or cumulatively without the necessity of embodiments according to the invention having to obtain these advantages. Without changing the scope of protection as defined by the enclosed claims, the following applies with respect to the disclosure of the original application and the patent: further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims.

The number of the features mentioned in the claims and in the description is to be understood to cover this exact number and a greater number than the mentioned number without having to explicitly use the adverb "at least". For example, if an element is mentioned, this is to be understood such that there is exactly one element or there are two elements or more elements. Additional features may be added to these features, or these features may be the only features of the respective product.

The reference signs contained in the claims are not limiting the extent of the matter protected by the claims. Their sole function is to make the claims easier to understand.

Other features and advantages of the present invention will become apparent to one with skill in the art upon examination of the following drawings and their description. It is intended that all such additional features and advantages be included herein within the scope of the present invention, as defined by the claims.

### BRIEF DESCRIPTION OF THE DRAWINGS

The invention can be better understood with reference to the following drawings. The components in the drawings are not necessarily to scale, emphasis instead being placed upon clearly illustrating the principles of the present invention. In the drawings, like reference numerals designate corresponding parts throughout the several views.
**Fig. 1** is a longitudinally sectional view of an apparatus for metering a flow of a fluid through a cylindrical tube section.
**Fig. 2** shows a radial cross-section through the apparatus of Fig. 1 sectioned along line A-A in Fig. 1; and
**Fig. 3** shows a radial cross-section through the apparatus of Fig. 1 sectioned along line B-B in Fig. 1, both radial cross-sections of Figs. 2 and 3 viewing against a main flow direction of the flow of the fluid through the cylindrical tube section.

### DESCRIPTION OF THE DRAWINGS

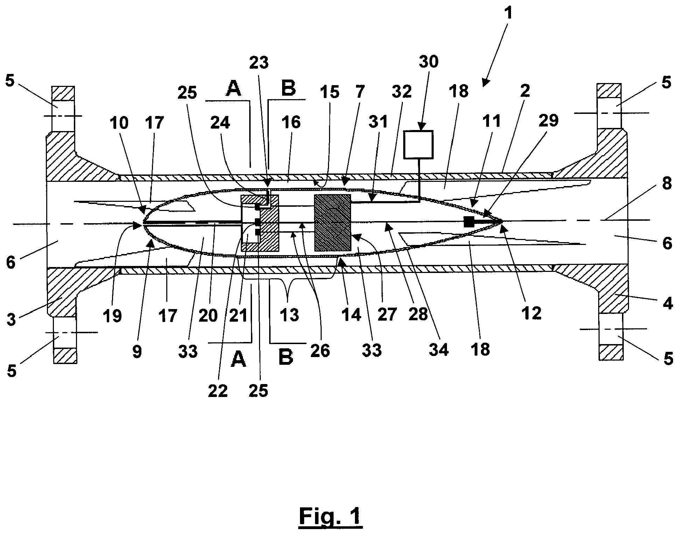

Now referring in greater detail to the drawings, **Fig. 1** is a longitudinally sectional view of an apparatus 1 for metering a flow of a fluid through a cylindrical tube section 2. The cylindrical tube section 2 longitudinally extends between two flanges 3 and 4. Typically, the tube section 2 is made of metal and is welded to the flanges 3 and 4 also made of metal in a fluid-tight way. The flanges 3 and 4 are provided with connection holes 5 to connect the apparatus 1 within a flow line 6 guiding a flow of a fluid. The fluid enters the apparatus 1 at the flange 3 and exits the apparatus 1 at the flange 4. Within the tube section 2 the flow line 6 is restricted by a flow deviating body 7. Generally, the flow deviating body 7 is of an elongated drop-shape, and it is coaxially arranged within the tube section 2. This means that the flow deviating body 7 is aligned with the longitudinal axis 8 of the tube section 2. At its front end 9, pointing towards the flange 3 and thus against the incoming flow of the fluid, the flow deviating body 7 comprises a rounded tip 10. At its back end 11, the flow deviating body 7 has a pointed tip 12. Further, the flow deviating body 7 comprises a cylindrical middle section 13. The position of the flow deviating body 7 within the tube section 2 is defined by a first plurality of fins 17 at its front end 9 and a second plurality of fins 18 at its back end 11. The fins 17 are attached to the front end 9 of the flow deviating body and extend from there radially towards the inner diameter 15 of the tube section 2 and longitudinally beyond the rounded tip 10. In upstream direction with regard to the fluid flowing through the tube section 2, the height of the fins 17 tapers towards the inner diameter 15 of the tube section 2. The fins 18 are attached to the back end 11 of the flow deviating body 7, and they extend radially towards the inner diameter 15 of the tube section 2 and longitudinally beyond the pointed tip 12. The height of the fins 18 tapers towards the inner diameter 15 of the tube section 2 in downstream direction of the fluid flowing through the tube section 2. Here, three fins 18 are provided in a rotational symmetric arrangement and offset in circumferential direction about the longitudinal axis 8 with regard to an also rotationally symmetric arrangement about the same axis 8 of three fins 17.

Between an outer diameter 14 of the flow deviating body 7 in the cylindrical middle section 13 and an inner diameter 15 of the tube section 2, an annular flow channel 16 remains through which the fluid flowing through the tube section 2 must pass. The restriction to the flow line 6 by means of the flow deviating body 7 causes an acceleration of the flow and a pressure drop bearing a relationship to the flow rate. To measure this drop in pressure, a high pressure tap 19 is provided at the front end 9 of the flow deviating body 7. Here, the high pressure tap 19 is provided on the longitudinal axis 8, i.e. at the foremost point of the rounded tip 10 in upstream direction. A tapping line 20 leads the high pressure from the high pressure tip 19 to a pressure chamber 21 within the flow deviating body 7. Here, the high pressure is transduced into electric signals by means of a pressure transducer 22. A low pressure in the annular flow channel 16 is tapped at low pressure taps 23 provided at the outer diameter 14 of the flow deviating body 7. Tapping lines 24 extend from the low pressure taps 23 through the flow deviating body 7 to the pressure chamber 21. Differential pressure transducers 25 transduce the pressure difference between the low pressure at each low pressure tap 23 and the high pressure at the high pressure tap 19 into electric signals. Via electric lines 26, the electric signals from the pressure transducers 22 and 25 are forwarded to a processor 27 located within the flow deviating body 7. Via a further electric line 28, the processor 27 is also connected to a temperature sensor 29 located at the pointed tip 12 and determining a temperature of the fluid flowing through the tube section 2. The processor processes all electric signals received via the electric lines 26 and 28 into a processed signal. This processed signal may, for example, directly indicate the flow rate of the fluid flowing through the tube section 2. The processed signal is forwarded to a device 30 located outside the tube section 2. The device 30 may be a display or a further processor for evaluating the processed signal, for example. The processed signal from the processor 27 is here forwarded to the device 30 via a wire 31, i.e. via a wired communication interface. The wire 31 has to be fed through the wall 32 of the tube section 2. This may be accomplished in an area of one of the fins 18, for example. The processed signal could, however, also be transferred from the processor 27 to the device 30 via a wireless communication interface. Any communication interface between the processor 27 and the device 30 may also be used for programming or interrogating of the processor 27 by the device 30, for example. Fig. 1 shows some free space 33 within a casing 34 of the flow deviating body 7. This free space 33 may be filled with some casting compound or the like as appropriate.

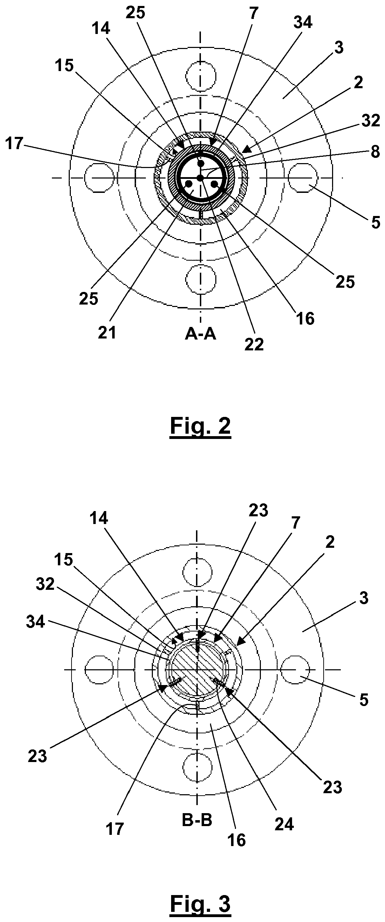

The arrangement of a total of three low pressure taps 23 and their tapping lines 24 extending towards the pressure chamber 21 can be seen from **Fig. 2 and 3****.** This arrangement is rotational symmetric about the longitudinal axis 8 and allows for monitoring the coaxial alignment of the flow deviating body 7 with the longitudinal axis 8. Only if this alignment is perfect, the electric signals from all differential pressure transducers 25 each transducing the pressure difference between the low pressure at one of the pressure taps 23 and the high pressure in the pressure chamber 21 are the same. Additionally or alternatively, these electric signals may be averaged for providing more time-stable electric signals to the processor 27 according to Fig. 1. Further, it can be seen from Fig. 2 and 3 that the low pressure taps 23 are offset with regard to the fins 17 in circumferential direction about the longitudinal axis 8. This ensures that any wake vortices generated by the fins 17 despite their streamlined shape do not interfere with measuring the low pressure in the annular flow channel 16 at the low pressure taps 23.

Particularly, if the communication interface between the processor 27 and the device 30 is wireless, the apparatus 1 may be easily set up in any existing tube section by simply arranging the flow deviating body 7 within that tube section 2. For metering the flow of a fluid through this tube section 2, it is only necessary to know the inner diameter 15 of that tube section 2. This information may, for example, be programmed in the processor 27 by means of the device 30. Besides the processor 27, a data logger or another storage device may be located in the flow deviating body 7 to store data related to the flow of a fluid through the tube section 2. These data may then be read out in intervals by the device 30.

Many variations and modifications may be made to the preferred embodiments of the invention without departing substantially from the spirit and principles of the invention. All such modifications and variations are intended to be included herein within the scope of the present invention, as defined by the following claims.

### LIST OF REFERENCE NUMERALS

- 1: apparatus
- 2: tube section
- 3: flange
- 4: flange
- 5: connection hole
- 6: flow line
- 7: flow deviating body
- 8: longitudinal axis
- 9: front end
- 10: rounded tip
- 11: back end
- 12: pointed tip
- 13: cylindrical middle section
- 14: outer diameter of flow deviating body 7
- 15: inner diameter tube section 2
- 16: annular flow channel
- 17: fin
- 18: fin
- 19: high pressure tap
- 20: tapping line
- 21: pressure chamber
- 22: pressure transducer
- 23: low pressure tap
- 24: tapping line
- 25: differential pressure transducer
- 26: electric line
- 27: processor
- 28: electric line
- 29: temperature sensor
- 30: device
- 31: wire
- 32: wall
- 33: free space
- 34: casing

## Claims

1. An apparatus (1) for metering a flow of a fluid through a cylindrical tube section (2), comprising:
- a flow deviating body (7) configured to be arranged in the tube section (2) such that an annular flow channel (16) remains between an outer diameter (14) of the flow deviating body (7) and an inner diameter (15) of the cylindrical tube section (2),
- a high pressure tap (19) at a front point of the flow deviating body (7) configured to tap a high pressure of the fluid,
- at least one low pressure tap (23) located at the outer diameter (14) of the flow deviating body (7) and configured to tap a low pressure of the fluid in the annular flow channel (16), and
- at least one pressure transducer (22, 25) configured to transduce at least one of
- both the high pressure and the low pressure, and
- a pressure difference between the high pressure and the low pressure into electric signals,
- wherein the flow deviating body (7) has a cylindrical middle section (13),
- wherein supports are provided at the flow deviating body (7), the supports being configured to support and align the flow deviating body (7) within the cylindrical tube section (2), and
- wherein the at least one low pressure tap (23) configured to tap the low pressure of the fluid in the annular flow channel (16) is offset in circumferential direction with regard to the supports,
**characterized in**
- **that** the flow deviating body (7) is of an elongated drop shape having a rounded front end (9), the cylindrical middle section (13) and at a tipped back end (11),
- **that** the supports consist of a first plurality of fins (17) and a second plurality of fins (18), the first plurality of fins (17) being provided at the rounded front end (9) of the flow deviating body (7), and the second plurality of fins (18) being provided at the tipped back end (11) of the flow deviating body (7), and
- **that** the at least one low pressure tap (23) configured to tap the low pressure of the fluid in the annular flow channel (16) is offset in circumferential direction with regard to the fins (17) of the first plurality of fins (17).

2. The apparatus (1) of claim 1, **characterized in that** the fins (17, 18) of at least the first or the second plurality of fins (17, 18) extend beyond the front end (9) or the back end (11) of the flow deviating body (7), and that the fins (17, 18) of at least the first or the second plurality of fins (17, 18), in an axial direction of the cylindrical tube section (2) away from the flow deviating body (7), taper in height towards the inner diameter (15) of the cylindrical tube section (2).

3. The apparatus (1) of claim 1 or 2, **characterized in that** the second plurality of fins (18) consists of three fins (18) that are provided in a rotational symmetric arrangement and offset in circumferential direction about the longitudinal axis (8) of the cylindrical tube section (2) with regard to an also rotationally symmetric arrangement of three fins (17) constituting the first plurality of fins (17).

4. The apparatus (1) of any of the preceding claims, **characterized in that** the high pressure tap (19) is provided on the longitudinal axis (8) of the cylindrical tube section (2) at the tip (10) of the rounded front end (9).

5. The apparatus (1) of any of the preceding claims, **characterized in that** the at least one pressure transducer (22, 25) is located within the flow deviating body (7).

6. The apparatus (1) of any of the preceding claims, **characterized in that** a plurality of low pressure taps (23) is provided at the outer diameter (14) of the flow deviating body (7), the plurality of low pressure taps being distributed over a circumference of the flow deviating body (7) and/or along a cylindrical middle section (13) of the flow deviating body (7).

7. The apparatus (1) of claim 6, **characterized in that** a plurality of transducers (25) is configured to either transduce the low pressure tapped at each of the plurality of low pressure taps (23) into one electric signal, or transduce each difference between the high pressure and the low pressure tapped at each of the plurality of low pressure taps (23) into one electric signal.

8. The apparatus (1) of any of the preceding claims, **characterized by** further comprising a temperature sensor (29) arranged at the flow deviating body (7) and configured to measure a temperature of the fluid and to provide an electric temperature signal.

9. The apparatus (1) of any of the preceding claims, **characterized by** further comprising a processor (27) within the flow deviating body (7), the processor (27) being configured to process all electric signals into a processed signal.

10. The apparatus (1) of any of the preceding claims, **characterized by** further comprising a wired or wireless communication interface configured to forward the electric signals or the processed signals from the flow deviating body (7) to a device (39) outside the cylindrical tube section (2), wherein wires (31) of the wired communication interface optionally extend through at least one of the fins (17, 18) supporting the flow deviation body (7) in the cylindrical tube section (2).

## Patentansprüche

1. Vorrichtung (1) zum Messen einer Strömung eines Fluids durch einen zylindrischen Rohrabschnitt (2) mit:
- einem Strömungsverdrängungskörper (7), der konfiguriert ist, um in dem Rohrabschnitt (2) so angeordnet zu werden, dass ein ringförmiger Strömungskanal (16) zwischen einem Außendurchmesser (14) des Strömungsverdrängungskörpers (7) und einem Innendurchmesser (15) des zylindrischen Rohrabschnitts (2) verbleibt,
- einem Hochdruckabgriff (19) an einem vorderen Punkt des Strömungsverdrängungskörpers (7), der konfiguriert ist, um einen hohen Druck des Fluids abzugreifen,
- mindestens einem Niedrigdruckabgriff (23), der am Außendurchmesser (14) des Strömungsverdrängungskörpers (7) angeordnet und konfiguriert ist, um einen niedrigen Druck des Fluids in dem ringförmigen Strömungskanal (16) abzugreifen, und
- mindestens einem Druckwandler (22, 25), der konfiguriert ist, um
- sowohl den hohen Druck als auch den niedrigen Druck und/oder
- eine Druckdifferenz zwischen dem hohen Druck und dem niedrigen Druck in elektrische Signale zu wandeln,
- wobei der Strömungsverdrängungskörper (7) einen zylindrischen Mittelabschnitt (13) aufweist,
- wobei Stützen an dem Strömungsverdrängungskörper (7) vorgesehen sind, wobei die Stützen konfiguriert sind, um den Strömungsverdrängungskörper (7) innerhalb des zylindrischen Rohrabschnitts (2) abzustützen und auszurichten, und
- wobei der mindestens eine Niedrigdruckabgriff (23), der konfiguriert ist, um den niedrigen Druck des Fluids in dem ringförmigen Strömungskanal (16) abzugreifen, bezüglich der Stützen in Umfangsrichtung versetzt ist,
**dadurch gekennzeichnet,**
- **dass** der Strömungsverdrängungskörper (7) von langgestreckter Tropfenform ist, die ein abgerundetes vorderes Ende (9), den zylindrischen Mittelabschnitt (13) und ein spitz zulaufendes Ende (11) aufweist,
- **dass** die bezüglich der Stützen aus einer ersten Mehrzahl von Finnen (17) und einer zweiten Mehrzahl von Finnen (18) bestehen, wobei die erste Mehrzahl von Finnen (17) an dem abgerundeten vorderen Ende (9) des Strömungsverdrängungskörpers (7) vorgesehen ist und die zweite Mehrzahl von Finnen (18) an dem spitz zulaufenden hinteren Ende (11) des Strömungsverdrängungskörpers (7) vorgesehen ist, und
- **dass** der mindestens eine Niedrigdruckabgriff (23), der konfiguriert ist, um den niedrigen Druck des Fluids in dem ringförmigen Strömungskanal (16) abzugreifen, bezüglich der Finnen (17) der ersten Mehrzahl von Finnen (17) in Umfangsrichtung versetzt ist.

2. Vorrichtung (1) nach Anspruch 1, **dadurch gekennzeichnet, dass** sich die Finnen (17, 18) mindestens der ersten oder der zweiten Mehrzahl von Finnen (17, 18) über das vordere Ende (9) oder das hintere Ende (11) des Strömungsverdrängungskörpers (7) hinaus erstrecken und dass die Finnen (17, 18) mindestens der ersten oder der zweiten Mehrzahl von Finnen (17, 18) in einer axialen Richtung des zylindrischen Rohrabschnitts (2) weg von dem Strömungsverdrängungskörper (7) ihrer Höhe nach zum Innendurchmesser (15) des zylindrischen Rohrabschnitts (2) zulaufen.

3. Vorrichtung (1) nach Anspruch 1 oder 2, **dadurch gekennzeichnet, dass** die zweite Mehrzahl von Finnen (18) aus drei Finnen (18) besteht, die in einer rotationssymmetrischen Anordnung vorgesehen sind und in Umfangsrichtung um die Längsachse (8) des zylindrischen Rohrabschnitts bezüglich einer ebenfalls rotationssymmetrischen Anordnung von drei Finnen (17) versetzt sind, die die erste Mehrzahl von Finnen (17) ausbilden.

4. Vorrichtung (1) nach einem der vorhergehenden Ansprüche, **dadurch gekennzeichnet, dass** der Hochdruckabgriff (19) auf der Längsachse (8) des zylindrischen Rohrabschnitts (2) an der Spitze (10) des abgerundeten vorderen Endes (9) vorgesehen ist.

5. Vorrichtung (1) nach einem der vorhergehenden Ansprüche, **dadurch gekennzeichnet, dass** mindestens ein Druckwandler (22, 25) innerhalb des Strömungsverdrängungskörpers (7) angeordnet ist.

6. Vorrichtung (1) nach einem der vorhergehenden Ansprüche, **dadurch gekennzeichnet, dass** eine Mehrzahl von Niedrigdruckabgriffen (23) am Außenumfang (14) des Strömungsverdrängungskörpers (17) angeordnet ist, wobei die Mehrzahl von Niedrigdruckabgriffen über einen Umfang des Strömungsverdrängungskörpers (7) und/oder längs eines zylindrischen Mittelabschnitts (13) des Strömungsverdrängungskörpers (7) verteilt angeordnet ist.

7. Vorrichtung (1) nach Anspruch 6, **dadurch gekennzeichnet, dass** eine Mehrzahl von Wandlern (25) konfiguriert ist, um entweder den niedrigen Druck, der an jedem der Mehrzahl von Niedrigdruckabgriffen (23) abgegriffen wird, in ein elektrisches Signal zu wandeln oder um jede Differenz zwischen dem hohen Druck und dem niedrigen Druck, der an jedem der Mehrzahl von Niedrigdruckabgriffen (23) abgegriffen wird, in ein elektrisches Signal zu wandeln.

8. Vorrichtung (1) nach einem der vorhergehenden Ansprüche, **dadurch gekennzeichnet, dass** sie weiterhin einen Temperatursensor (29) aufweist, der an dem Strömungsverdrängungskörper (7) angeordnet und konfiguriert ist, um eine Temperatur des Fluids zu messen und um ein elektrisches Temperatursignal bereitzustellen.

9. Vorrichtung (1) nach einem der vorhergehenden Ansprüche, **dadurch gekennzeichnet, dass** sie weiterhin einen Prozessor (27) innerhalb des Strömungsverdrängungskörper (7) aufweist, wobei der Prozessor (27) konfiguriert ist, um alle elektrischen Signale in ein verarbeitetes Signal zu verarbeiten.

10. Vorrichtung (1) nach einem der vorhergehenden Ansprüche, **dadurch gekennzeichnet, dass** sie weiterhin eine drahtgebundene oder drahtlose Kommunikationsschnittstelle aufweist, die konfiguriert ist, um die elektrischen Signale oder die verarbeiteten Signale von dem Strömungsverdrängungskörper (7) an eine Vorrichtung (39) außerhalb des zylindrischen Rohrabschnitts (2) weiterzuleiten, wobei sich Drähte (31) der drahtgebundenen Kommunikationsschnittstelle optional durch mindestens eine der Finnen (17, 18) erstrecken, die den Strömungsverdrängungskörper (7) in dem zylindrischen Rohrabschnitt (2) abstützen.

## Revendications

1. Appareil (1) de mesure d'un flux de fluide dans une section de tube cylindrique (2), qui comprend :
- un corps de déviation de flux (7) configuré pour être placé dans la section de tube (2) de sorte qu'un canal d'écoulement annulaire (16) reste entre un diamètre extérieur (14) du corps de déviation de flux (7) et un diamètre intérieur (15) de la section de tube cylindrique (2),
- un robinet à haute pression (19) au niveau d'un point avant du corps de déviation de flux (7) configuré pour prendre une pression élevée du fluide,
- au moins un robinet à basse pression (23) situé au niveau du diamètre extérieur (14) du corps de déviation de flux (7) et configuré pour prendre une basse pression du fluide dans le canal d'écoulement annulaire (16), et
- au moins un transducteur de pression (22, 25) configuré pour transduire au moins l'une
- de la pression élevée et de la basse pression,
- d'une différence de pression entre la pression élevée et la basse pression en signaux électriques,
- dans lequel le corps de déviation de flux (7) possède une section intermédiaire cylindrique (13),
- dans lequel des supports sont prévus au niveau du corps de déviation de flux (7), les supports étant configurés pour supporter et aligner le corps de déviation de flux (7) dans la section de tube cylindrique (2),
et
- dans lequel le robinet à basse pression (23) configuré pour prendre la pression du fluide dans le canal d'écoulement annulaire (16) est décalé dans une direction circonférentielle par rapport à des supports,
**caractérisé en ce que**
- le corps de déviation de flux (7) possède une forme de goutte allongée qui présente une extrémité avant arrondie (9), la section intermédiaire cylindrique (13), et une extrémité arrière inclinée (11),
- les supports se composent d'une première pluralité d'ailettes (17) et d'une seconde pluralité d'ailettes (18), la première pluralité d'ailettes (17) étant prévue au niveau de l'extrémité avant arrondie (9) du corps de déviation de flux (7), et la seconde pluralité d'ailettes (18) étant prévue au niveau de l'extrémité arrière inclinée (11) du corps de déviation de flux (7), et
- le robinet à basse pression au moins (23) configuré pour prendre la basse pression du fluide dans le canal d'écoulement annulaire (16) est décalé dans la direction circonférentielle par rapport aux ailettes (17) de la première pluralité d'ailettes (17).

2. Appareil (1) selon la revendication 1, **caractérisé en ce que** les ailettes (17, 18) d'au moins la première ou la seconde pluralité d'ailettes (17, 18) s'étendent au-delà de l'extrémité avant (9) ou de l'extrémité arrière (11) du corps de déviation de flux (7), et **en ce que** les ailettes (17, 18) d'au moins la première ou la seconde pluralité d'ailettes (17, 18), dans une direction axiale de la section de tube cylindrique (2) éloignée du corps de déviation de flux (7), s'effilent en hauteur vers le diamètre intérieur (15) de la section de tube cylindrique (2).

3. Appareil (1) selon la revendication 1 ou 2, **caractérisé en ce que** la seconde pluralité d'ailettes (18) se compose de trois ailettes (18) qui sont prévues en symétrie rotationnelle et décalées dans la direction circonférentielle autour de l'axe longitudinal (8) de la section de tube cylindrique (2) par rapport à une symétrie de rotation des trois ailettes (17) qui constituent la première pluralité d'ailettes (17).

4. Appareil (1) selon l'une quelconque des revendications précédentes, **caractérisé en ce que** le robinet à haute pression (19) est prévu sur l'axe longitudinal (8) de la section de tube cylindrique (2) au niveau de l'extrémité (10) de l'extrémité avant arrondie (9).

5. Appareil (1) selon l'une quelconque des revendications précédentes, **caractérisé en ce qu'**au moins un transducteur de pression (22, 25) est situé dans le corps de déviation de flux (7).

6. Appareil (1) selon l'une quelconque des revendications précédentes, **caractérisé en ce qu'**une pluralité de robinets à basse pression (23) est prévue au niveau du diamètre extérieur (14) du corps de déviation de flux (7), la pluralité de robinets à basse pression étant répartie sur une circonférence du corps de déviation de flux (7) et/ou le long d'une section intermédiaire cylindrique (13) du corps de déviation de flux (7).

7. Appareil (1) selon la revendication 6, **caractérisé en ce qu'**une pluralité de transducteurs (25) est configurée pour transduire la basse pression prise au niveau de chacun de la pluralité de robinets à basse pression (23) en un signal électrique, ou pour transduire chaque différence entre la haute pression et la basse pression prises au niveau de chacun de la pluralité de robinets à basse pression (23) en un signal électrique.

8. Appareil (1) selon l'une quelconque des revendications précédentes, **caractérisé en ce qu'**il comprend en outre un capteur de température (29) prévu au niveau du corps de déviation de flux (7) et configuré pour mesurer une température du fluide et pour fournir un signal électrique de température.

9. Appareil (1) selon l'une quelconque des revendications précédentes, **caractérisé en ce qu'**il comprend en outre un processeur (27) dans le corps de déviation de flux (7), le processeur (27) étant configuré pour traiter tous les signaux électriques en un signal traité.

10. Appareil (1) selon l'une quelconque des revendications précédentes, **caractérisé en ce qu'**il comprend en outre une interface de communication câblée ou sans fil configurée pour envoyer les signaux électriques ou les signaux traités entre le corps de déviation de flux (7) et un dispositif (39) situé à l'extérieur de la section de tube cylindrique (2), les fils (31) de l'interface de communication câblée s'étendant optionnellement dans au moins l'une des ailettes (17, 18) qui supportent le corps de déviation de flux (7) dans la section de tube cylindrique (2).
